# EUROPEAN PATENT SPECIFICATION

(11) **EP 1 180 577 B1**
(45) Date of publication and mention of the grant of the patent: **16.11.2005**
(21) Application number: 01303313.9
(22) Date of filing: 09.04.2001
(51) Int. Cl.: F01D 5/06, F01D 5/08, F01D 21/00

(54) **Method of operating a turbine**
Betriebsverfahren einer Turbine
Procéde de fonctionnement d'une turbine

(30) Priority: 08.08.2000 US 635086
(43) Date of publication of application: 20.02.2002
(73) Proprietor: GENERAL ELECTRIC COMPANY, Schenectady, NY 12345 (US)
(72) Inventor: Schmidt, Mark Christopher, Niskayuna, New York 12309 (US)
(74) Representative: Goode, Ian Roy

(56) References cited:
- EP-A- 1 013 892
- EP-A- 1 013 893
- EP-A- 1 013 895
- US-A- 4 478 553
- US-A- 4 722 062
- US-A- 5 403 150

## Description

The present invention relates to turbines such as land-based gas turbines for power generation and, more particularly, to a method of controlling exhaust blower mass flow to maintain a rabbet load while preventing a bearing fire due to a high air/oil seal temperature.

In a typical gas turbine, the turbine rotor is formed by stacking rotor wheels and spacers, the stacked plurality of wheels and spacers being bolted one to the other. Rabbeted joints are typically provided between the spacers and wheels.

During a standard fire shutdown, a rabbet joint between the fourth stage wheel and the aft shaft may become unloaded due to a high rate of cooling from a continuously run bearing exhaust blower, resulting in a gap. An open or unloaded rabbet joint could cause the parts to move relative to each other and thereby cause the rotor to lose balance, possibly leading to high vibrations and the need for expensive and time-consuming rebalancing or rotor replacement. A rotor imbalance is operationally unacceptable, and typically design engineers make every effort to insure that such imbalance will not occur. If, on the contrary, the bearing exhaust blower is turned off during a shutdown, the forward air/oil seal temperature will exceed the maximum design practice criteria due to a "soak-back" phenomenon. An air/oil seal temperature above the established maximum design limits could result in a bearing fire with catastrophic consequences to the machine.

EP-A-1 013 892 discloses a turbine and a method of its operation in which passive control of cooling medium flow is achieved by means of an annular seal member that extends into the coolant flowpath.

According to the present invention, there is provided a method of operating a turbine comprising maintaining a rabbet joint load while keeping an air/oil seal temperature acceptably low by controlling a thermal parameter of the turbine with an existing turbine component, the method characterised by a controlling step comprising controlling a mass flow of air across a turbine exhaust frarne, wherein the existing turbine component comprises an exhaust blower, and wherein the step of controlling a mass flow of air comprises controlling a speed of the exhaust blower.

In an exemplary embodiment of the invention, a method of operating a turbine comprises maintaining a rabbet joint load while keeping an air/oil seal temperature acceptably low by controlling a thermal parameter of the turbine with an existing turbine component. This step is practiced by controlling a mass flow of air across a turbine exhaust frame. In this context, the turbine component is an exhaust blower, and the mass flow of air is controlled by controlling a speed of the exhaust blower.

In an exemplary embodiment of the invention, a turbine includes a turbine wheel and an aft shaft secured to and in axial registration with each other and with a rabbeted joint therebetween. The turbine wheel and the aft shaft are differently responsive to applied temperatures creating a transient thermal mismatch. A method of operating the turbine includes determining a thermodynamic model of turbine components in accordance with component characteristics, and controlling a mass flow of air across a turbine exhaust frame in accordance with the thermodynamic model. Examples of the component characteristics include operating temperature, mass, density, relative position, speed and the like.

In another exemplary embodiment of the invention, a method of operating a turbine including a fourth stage wheel disposed adjacent an aft shaft includes controlling a speed of a turbine blower in the vicinity of a rabbet joint between the fourth stage wheel and the aft shaft to thereby control a cooling rate of the rabbet joint.
An embodiment of the invention will now be described, by way of example, with reference to the accompanying drawings, in which:
FIGURE 1 is a fragmentary cross-sectional view of a portion of a turbine; and
FIGURE 2 is an exemplary illustration of a turbine showing determinations of a thermodynamic model.

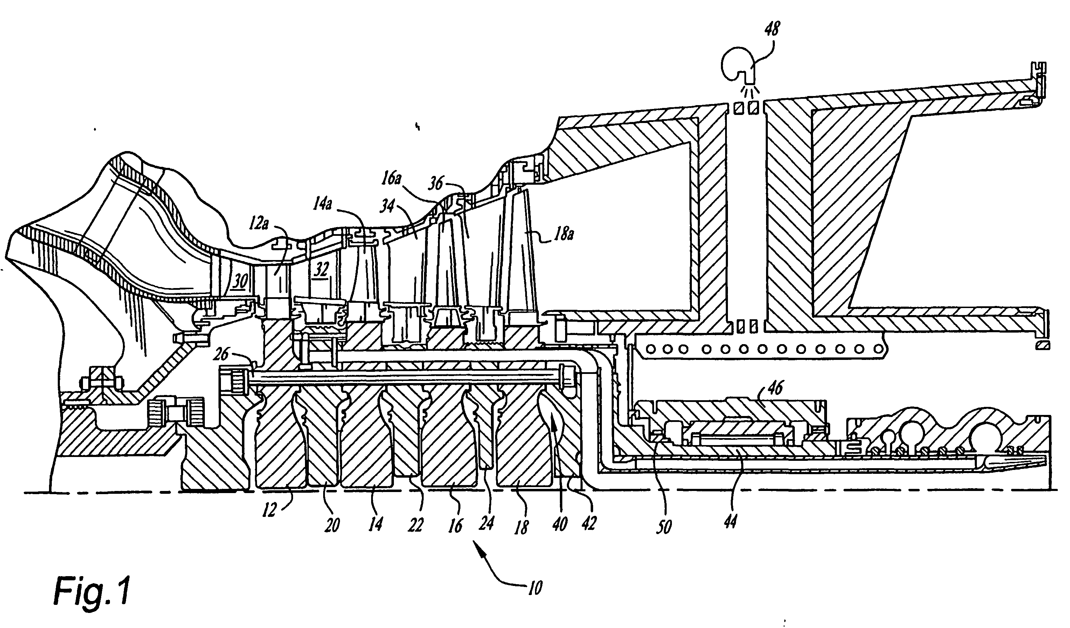

Referring to FIGURE 1, there is illustrated a portion of a turbine including a turbine rotor, generally designated 10, comprised of stacked elements, for example, the rotor wheels 12, 14, 16 and 18 that form portions of a four-stage exemplary turbine rotor, with spacers 20, 22 and 24 alternating between the wheels. It will be appreciated that the wheel and spacer elements are held together in the rotor by a plurality of elongated, circumferentially extending bolts, only one of which is illustrated at 26. The wheels 12, 14, 16, 18 mount a plurality of circumferentially spaced turbine buckets 12a, 14a, 16a, 18a, respectively. Nozzles 30, 32, 34, 36 form stages with the buckets 12a, 14a, 16a, 18a, respectively. The wheels and spacers lie in axial registration one with the other, and rabbeted joints are provided between the wheels and spacers. An exemplary rabbeted joint 40 is illustrated between the last-stage wheel 18 and an aft shaft wheel 42 forming part of an aft shaft 44. The rabbeted joints are maintained locked to one another throughout all ranges of operation of the turbine. As illustrated, the aft shaft 44 is rotatable with the rotor 10 within an aft bearing 46.

Thermal mismatches between various elements of the rotor occur during operation of the turbine, particularly during shutdown and turbine startup. The machine typically includes a continuously run bearing exhaust blower 48. During steady-state turbine operations, the temperature distribution among the various elements of the turbine lies within a predetermined range of thermal mismatch that would not deleteriously affect the operation of the turbine. During transient operations (i.e., shutdown and startup), however, thermal mismatches are significantly greater due to a high rate of cooling from the exhaust blower 48 and must be accommodated. For example, the rabbeted joint 40 between the aft shaft wheel 42 and the wheel 18 of the final, e.g., fourth stage, has a significant thermal mismatch well beyond an acceptable thermal mismatch. Such a large thermal mismatch may cause an open or unloaded rabbet due to differing rates of thermal expansion and contraction, which condition could cause the elements to move relative to one another and thus cause the rotor to lose balance, leading to high vibrations and a requirement for costly rebalancing or rotor replacement.

More particularly, during shutdown, hot gases flowing through the hot gas path of the various turbine stages and the flow of steam through the bore tube cooling circuit assembly are terminated. Because the wheel 18 has a very large mass and has been heated to a high temperature during steady-state operation of the turbine, the wheel 18 will lose heat at a very slow rate in comparison with the heat loss in the aft shaft wheel 42, causing the large thermal mismatch at the rabbeted joint 40.

In one attempt to correct this problem, the exhaust blower 48 could be shut off during turbine shutdown in an effort to combat the thermal mismatch at the rabbeted joint 40. In this context, however, with the exhaust blower 48 turned off during shutdown, a forward air/oil seal 50 temperature could easily exceed a maximum design practice criteria due to "soak-back." An air/oil seal 50 temperature above the established maximum design limits could result in a bearing fire, with catastrophic consequences to the machine.

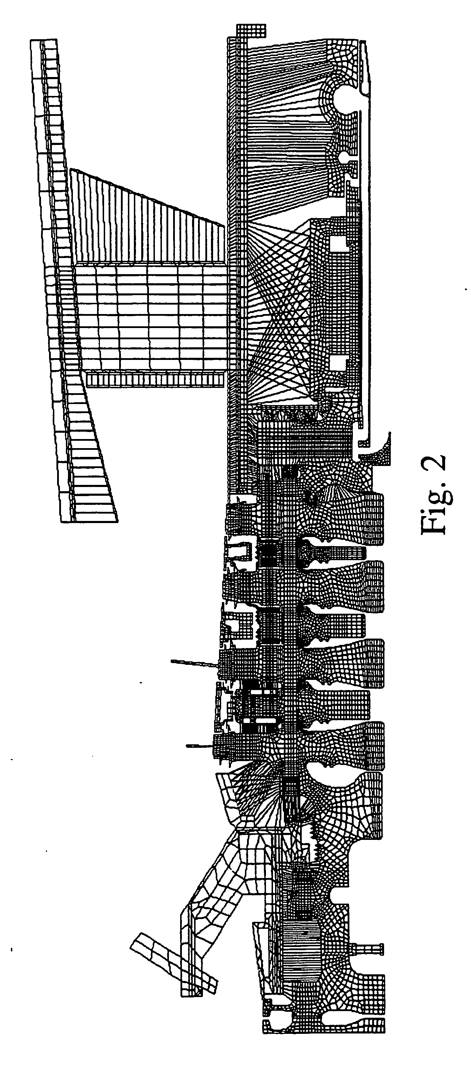

Thus, by controlling a mass flow of exhaust air output by the bearing blower during a transient state, the rabbet load can be maintained at an acceptable limit and the air/oil seal temperature can be maintained below established limits. Controlling a mass flow of air across the turbine exhaust frame is achieved by controlling the speed of the exhaust blower 48. The blower speed is varied over time according to a profile determined based on thermodynamic characteristics of the machine, which are properties of the physical and mechanical aspects of the machine components. Using a developed detailed full flow physics model as shown in FIGURE 2, a baseline fired shutdown transient can be analyzed both thermally and mechanically to determine what schedule of the bearing blower 48 will achieve the desired results. FIGURE 2 is an illustration of an exemplary thermodynamic model of a General Electric Model 7H gas turbine design. This model encompasses a detailed part-by-part thermodynamic structural analysis of the machine, including, for example, 650 full (stationary and rotating part) physics fluid elements, 25,000 two-dimensioned thermal solid elements, 40,000 nodes, 7,000 surface elements with 1,200 boundary conditions, 1,000 conduction heat transfer links, and 3,000 radiation heat transfer links at 100 seconds per iteration. Thermodynamic models such as that shown in FIGURE 2 will naturally vary from machine to machine, and as noted, the model shown in FIGURE 2 is exemplary.

Using a thermodynamic model such as the exemplary thermal model illustrated in FIGURE 2, an acceptable profile range for exhaust blower control can be determined/optimized to meet the design criteria of maintaining rabbet load and a closed rabbet joint while keeping the air/oil seal 50 at an acceptably low temperature. In this context, profiles can be run through the model and optimized using a statistical process to obtain a robust configuration that provides the most margin between acceptable limits (i.e., of rabbet load and air/oil seal temperature).

With the method of the present invention, by controlling the bearing blower in a precise manner according to an optimized blower profile, a rabbet load can be maintained at an acceptable limit during a turbine transient stage (such as shutdown or startup) and the air/oil seal temperature can be maintained below established limits. With accurate control of the blower flow feeding the aft shaft cooling circuit, the process capability can easily exceed six sigma for both the rabbet load and the seal temperature, therefore eliminating the thermal mismatch at the rabbet joint

## Claims

1. A method of operating a turbine comprising maintaining a rabbet joint (40) load while keeping an air/oil seal (50) temperature acceptably low by controlling a thermal parameter of the turbine with an existing turbine component, this controlling step comprising controlling a mass flow of air across a turbine exhaust frame, the method **characterized in that** the existing turbine component comprises an exhaust blower (48), and that the step of controlling a mass flow of air comprises controlling a speed of the exhaust blower.

2. The method according to claim 1, wherein the turbine further comprises a turbine wheel (18) and an aft shaft (44) secured to and in axial registration with each other and with said rabbeted joint (40) therebetween, the turbine wheel and the aft shaft being differently responsive to applied temperatures creating a transient thermal mismatch, the method comprising the additional step of determining a thermodynamic model of turbine components in accordance with component characteristics, and controlling a mass flow of air across a turbine exhaust frame in accordance with the thermodynamic model.

3. The method according to claim 2, wherein the component characteristics comprise operating temperature, mass, density, relative position and speed.

4. The method according to claim 1, wherein the turbine further comprises a fourth stage wheel (18) disposed adjacent an aft shaft (44), the turbine exhaust blower being in the vicinity of the rabbet joint (40) between the fourth stage wheel and the aft shaft

## Patentansprüche

1. Verfahren zum Betrieb einer Turbine einschließlich der Aufrechterhaltung der Last einer Falzverbindung (40), indem die Temperatur einer Luft/Öl-Dichtung (50) akzeptabel niedrig gehalten wird, indem ein thermischer Parameter der Turbine an einer vorhandenen Turbine unter Kontrolle gebracht wird, wobei dieser Schritt des Unterkontrollebringens beinhaltet, dass ein durch einen Turbinenauslassrahmen fließender Luftmassenstrom unter Kontrolle gebracht wird, wobei das Verfahren **dadurch gekennzeichnet ist, dass** die vorhandene Turbinenkomponente einen Auslassbläser 48 umfasst und dass der Schritt des Unterkontrollebringens eines Luftmassenstroms beinhaltet, dass die Drehzahl des Auslassbläsers unter Kontrolle gebracht wird.

2. Verfahren nach Anspruch 1, bei dem die Turbine außerdem ein Turbinenrad (18) und eine Turbinenwelle (44) aufweist, die in axialer Fluchtung mit aneinander durch die Falzverbindung (40) gesichert sind, wobei das Turbinenrad und die hintere Welle auf Temperaturen, denen sie ausgesetzt sind, unterschiedlich reagieren, was eine Übergangstemperaturfehlanpassung verursacht, wobei das Verfahren den zusätzlichen Schritt aufweist, dass ein mit Komponentencharakteristika übereinstimmendes thermodynamisches Modell von Turbinenkomponenten ermittelt wird und dass ein Luftmassenfluss in dem Turbinenauslassrahmen gemäß des thermodynamischen Modells beeinflusst wird.

3. Verfahren nach Anspruch 2, bei dem die Komponentencharakteristika die Betriebstemperatur, die Masse, die Dichte, die Relativposition und die Geschwindigkeit beinhalten.

4. Verfahren nach Anspruch 1, bei dem die Turbine außerdem ein einer hinteren Welle (44) benachbartes Rad (18) einer vierten Stufe aufweist, wobei der Turbinenauslassbläser in der Nachbarschaft der Falzverbindung (40) zwischen dem Rad der vierten Stufe und der hinteren Welle angeordnet ist.

## Revendications

1. Procédé d'exploitation d'une turbine comprenant le fait de maintenir une charge d'un assemblage à feuillure (40) tout en maintenant la température d'un joint air/huile (50) raisonnablement basse en commandant un paramètre thermique de la turbine avec un composant de turbine existant, cette étape de commande comprenant le fait de commander le débit massique d'air traversant un cadre de sortie de turbine, le procédé étant **caractérisé en ce que** le composant de turbine existant comprend un ventilateur de sortie (48), et **en ce que** l'étape de commande d'un débit massique d'air comprend le fait de commander une vitesse du ventilateur de sortie.

2. Procédé selon la revendication 1, dans lequel la turbine comprend en outre une roue de turbine (18) et un arbre arrière (44) fixés l'un à l'autre et en alignement axial mutuel et avec ledit assemblage à feuillure (40) entre eux, la roue de turbine et l'arbre arrière réagissant différemment aux températures subies, ce qui crée une discordance thermique transitoire, le procédé comprenant l'étape supplémentaire consistant à déterminer un modèle thermodynamique des composants de la turbine d'après des caractéristiques de composants, et à commander un débit massique d'air traversant un cadre de sortie de la turbine selon ce modèle thermodynamique.

3. Procédé selon la revendication 2, dans lequel les caractéristiques des composants comprennent la température de marche, la masse, la densité, la position relative et la vitesse.

4. Procédé selon la revendication 1, dans lequel la turbine comprend en outre une roue de quatrième étage (18) placée au voisinage d'un arbre arrière (44), le ventilateur de sortie de la turbine se trouvant au voisinage de l'assemblage à feuillure (40), entre la roue de quatrième étage et l'arbre arrière.
